# EUROPÄISCHE PATENTANMELDUNG

(11) **EP 1 453 249 A1**
(43) Veröffentlichungstag der Anmeldung: **01.09.2004**
(21) Anmeldenummer: 03004173.5
(22) Anmeldetag: 26.02.2003
(51) Int. Cl.: H04L 12/56, H04Q 7/22, H04L 1/18

(54) **SubNet Dependent Convergence Protocol (SNDCP)/Logical Link Control (LLC) Modifizierung**

(71) Anmelder: SIEMENS AKTIENGESELLSCHAFT, 80333 München (DE)
(72) Erfinder: Eberl, Robert, 1220 Wien (AT)

(57) **Zusammenfassung**

Eine Übertragung von Daten, insbesondere Streaming- Daten, in einem Mobilfunknetz mit geringem Datenverlust und geringem Delay bei der Übertragung wird ermöglicht durch ein Verfahren zum Übertragen von Daten in einem Mobilfunknetz, bei welchem die Daten in einem SNDCP einer Vermittlungseinrichtung (SGSN) im Acknowledged- Modus übertragen werden, während in einem LLC der Vermittlungseinrichtung Daten im Unacknowledged-Modus übertragen werden.

## Beschreibung

Die Erfindung betrifft Verfahren und Vorrichtungen zur Übertragung von Daten in einem Mobilfunknetz.

Streaming (z.B. per GPRS) von Daten stellt an ein Mobilfunknetz hohe Anforderungen hinsichtlich möglichst geringem Datenverlust und möglichst geringem Delay (Verzögerung) bei der Übertragung der Daten. SGSN - Vermittlungseinrichtungen (Serving GPRS Support Nodes) eines Mobilfunknetzes können in einem UnAcknowlegded Mode (=ohne Bestätigung des Erhalts von Daten durch den Empfänger) oder in einem Acknowledged Mode (=mit Bestätigung des Erhalts von Daten durch den Empfänger) Daten übertragen. Der UnAcknowlegded Mode erfüllt die Anforderungen hinsichtlich geringen Datenverlustes nicht- insbesondere bei einem Zellwechsel einer Mobilstation zu der Daten übertragen werden. Der Acknowledged Mode erfüllt die Anforderungen hinsichtlich des maximalen Delays (=Verzögerung) nicht, da der von ihm verwendete Re-transmission- Mechanismus (= Erneutes Senden nach Übertragungsfehlern) bei Zellwechseln nicht hinreichend zeiteffizient ist.

Aufgabe der vorliegenden Erfindung ist es, eine Übertragung von Daten, insbesondere Streaming- Daten, in einem Mobilfunknetz möglichst effizient mit geringem Datenverlust und geringem Delay bei der Übertragung zu ermöglichen. Die Aufgabe wird jeweils durch die Gegenstände der unabhängigen Ansprüche gelöst. Erfindungsgemäß wird also eine Mischform aus dem UnAcknowlegded Mode und dem Acknowledged Mode vorgeschlagen, zweckmäßig mit bestimmten Änderungen bisher üblicher Verwendung (bisher jeweils nur eines) dieser Modes.

Weitere Merkmale und Vorteile der Erfindung ergeben sich aus den Unteransprüchen und der nachfolgenden Beschreibung eines Ausführungsbeispiels anhand der Zeichnung. Dabei zeigt:

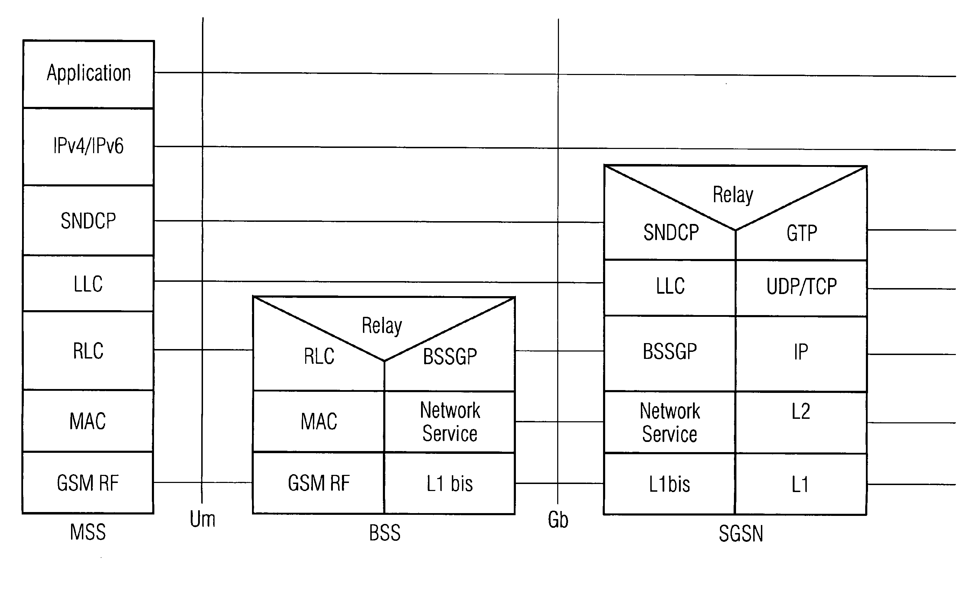

- Figur 1: schematisch Elemente eines Mobilfunknetzes, insbesondere Elemente
SNDCP und LLC einer Vermittlungseinrichtung SGSN.

Wie Figur 1 schematisch zeigt, kommen in einem Mobilfunknetz von diesem zu einem mobilen Telekommunikationsteilnehmer (MS) (also im Downlink) zu übertragende Daten (Netz → MS) von einem GGSN (dieser ist nicht in Figur 1 dargestellt und wäre rechts vom SGSN in Figur 1 angeordnet) in einem SGSN an, werden mit einem SNDCP Header versehen und dem LLC der SGSN übergeben. Der LLC setzt einen weiteren Header (Kopf) davor und übergibt die Daten dem BSSGP der Vermittlungseinrichtung SGSN. Der BSSGP packt diesen LLC Rahmen (LLC Header + SNDCP Header + Daten) in eine Nachricht ein und sendet die Nachricht (mit den Daten) an ein BSS (Gb Schnittstelle). Das BSS entnimmt der BSSGP Nachricht den LLC Frame und übergibt ihn (und die Daten) dem RLC/MAC. Der RLC/MAC sendet dann diese über die Luft (Um Schnittstelle). In der MS durchläuft dann das Packet wieder die Protokollschichten (RLC/MAC → LLC → SNDCP).

Beim SNDCP (beschrieben in 3GPP TS 44.065, siehe www.3gpp.org) und LLC (3GPP TS 44.064,) gibt es zwei verschiedene Betriebsarten, Unacknowledged Mode und Acknowlegded Mode. Diese Betriebsarten werden derzeit wahlweise betrieben, d.h. LLC und SNDCP im Ack (Acknowledged Modus) oder beide im UnAck (Unacknowlegded Modus).

### UnAcknowledged Mode:

Der SNDCP (im SGSN) übergibt dem LLC die Daten samt SNDCP Kopf. Der LLC fügt seinen Kopf dazu und über BSSGP werden die Daten zur BSS gesendet. In diesem Mode sind sowohl die SNDCP Rahmen als auch die LLC Rahmen mit voneinander unabhängigen Nummern versehen (Sequenznummern). Sowohl SNDCP als auch LLC speichern die Daten nach der Bearbeitung nicht.

### Acknowledged Mode:

Der SNDCP übergibt ihm zugehende Daten samt Header (=Kopf) dem LLC der SGSN und speichert die Daten. In diesem Kopf ist u.a. eine Sequenznummer enthalten.
Der LLC fügt auch einen Kopf hinzu. Auch hier ist eine LLC Sequenznummer enthalten. Der LLC speichert diesen LLC Frame und sendet ihn über den vorher beschriebenen Weg der MS.
In der MS wird, wenn der LLC frame (LLC Rahmen) empfangen wurde, ein Bestätigungsframe generiert, der dann dem SGSN zurückgesendet wird. In diesem Bestätigungsframe ist die Sequenznummer des Frames enthalten, das bestätigt werden soll. Die Frequenz der Bestätigungen ist einstellbar, d.h. der SGSN kann z.B. nur jeden sechsten Frame zur Bestätigung anfordern. Mit Eintreffen dieser Bestätigung gelten automatisch alle davor eingetroffenen Frames auch als bestätigt. Werden ein oder mehrere Rahmen im LLC bestätigt, so meldet dies der LLC dem SNDCP zurück, welcher dann den (Mindestens einen) davor gespeicherten SNDCP Frame (Rahmen) verwirft (= Die Daten wurden erfolgreich übertragen).

### RLC:

Beim RLC gibt es auch einen Acknowledged Mode, d.h. der BSS wird der Empfang eines Packetes von der MS Packetes bestätigt.. Es gibt auch dort einen UnAcknowledged Mode, aber für diesen ist bisher nicht angedacht, ihn bei Streaming Traffic Class Anwendungen zu verwenden.

### Zellwechsel:

Wechselt die MS die Zelle des Mobilfunknetzes, dann stellen dies BSS und SGSN zunächst nicht fest (zumindest nicht auf LLC und SNDCP Ebene). Die Daten werden weiter vom SGSN zur BSS gesendet. Die BSS kann die Daten aber nicht zur MS senden (da die MS nicht mehr in der bisherigen Zelle ist und daher auch keine Bestätigungen beim RLC ankommen). Es wird daher ein Buffer in der BSS angefüllt.
Ist die MS in einer neuen Zelle, so sendet sie auf LLC Ebene eine Verständigung an den SGSN.
Der SGSN stößt dann eine sogenannte FLUSH Prozedur an. Die Daten im BSS Buffer werden entweder gelöscht oder der Buffer wird der neuen Zelle zugeordnet.
Welche von den beiden Methoden zur Anwendung kommt hängt in 1. Linie von dem Szenario ab:
Liegt die neue Zelle im selben BSS wie die bisher von der MS benutzte, so können die Daten für die MS u.U. der neuen Zelle zugeordnet werden (dies hängt u.a. von der Hardware ab). Können die Daten nicht der neuen Zelle zugeordnet werden, so werden sie gelöscht. Das Ergebnis wird dem SGSN mitgeteilt.

Wendet man dies auf die LLC/SNDCP Betriebsarten an, so passiert -wenn der BSS Buffer gelöscht wird - folgendes.
- Im UnAcknowledged Mode: Die Daten sind verloren - sie sind nicht gespeichert im SGSN
- Im Acknowledged Mode: Über Re-transmission-Mechanismen (siehe unten) werden die Daten neu gesendet.

### Kann der BSS Buffer "gerettet" werden, so ändert sich nichts

### Re-transmissions beim LLC Ack Mode:

Da, wie oben erwähnt, der SGSN weiter Daten sendet kommen in der neuen Zelle bei der Mobilstation MS Daten an in denen eine Lücke auftritt (die im BSS Buffer abgelegten Daten, die gelöscht wurden). Der LLC in der MS erkennt diese Lücke (anhand der Sequenznummer) und sendet eine dementsprechende Nachricht an den SGSN. Der SGSN markiert die entsprechenden LLC Frames zur Wiederholung und sendet sie wieder der MS. Sobald diese Frames in der MS ankommen und die Lücke aufgefüllt ist, ist der Datenstrom wiederhergestellt. Danach erst kann der LLC in der MS wieder Daten an die oberen Ebenen (d.h. SNDCP usw) übergeben. Währenddessen ist der Datenstrom LLC → SNDCP im MS unterbrochen und die out-of-sequence Daten im LLC werden zwischengespeichert.

Streaming stellt einige Anforderungen, nämlich insbesondere möglichst hinsichtlich geringem Datenverlust und hinsichtlich geringem Delay der Daten bei der Übertragung.

Der UnAcknowlegded Mode erfüllt die Bedingungen hinsichtlich des Datenverlustes nicht, besonders bei Zellwechsel.
Der Acknowledged Mode erfüllt die Bedingungen hinsichtlich des Delays nicht, da der Re-transmission Mechanismus bei Zellwechseln nicht zeiteffizient ist.

Es wird deshalb eine Mischform der beiden Modi vorgeschlagen, zweckmäßig mit geringen Änderungen bisher üblicher Realisierungen der beiden Modi:

Der SNDCP arbeitet im Acknowledged Mode mit der Einschränkung, dass bisher verwendete Vorkehrungen für den Fall von Datenverlust deaktiviert werden (z.B. Vorkehrungen betreffend Lücken in SNDCP Sequenznummern).

Der LLC arbeitet in der UnAcknowledged-Betriebsart mit folgenden Änderungen:
- Beim Empfang von Daten vom SNDCP werden die Daten zwischengespeichert.
- Der LLC übergibt dem BSSGP den LLC Frame (z.B. "UI Frame") und die erwartete Bestätigung (z.B. "S-Frame").
- Der BSSGP sendet LLC Rahmen und Bestätigung in separaten Informationselementen, aber in derselben Nachricht.
- Die BSS nimmt den LLC Rahmen und sendet diesen der MS. Die BSS nimmt den "S-Frame" und sendet diesen dem SGSN zurück.
   o Es ist nicht notwendig jedes mal diese Bestätigung zu senden. Es genügt Timer dafür zu verwenden (entweder Zeit- oder Frequenzabhängig ).
   o Gibt es Datenverkehr von der MS zum SGSN (=im uplink) so kann die BSS den S-Frame auch dort in die BSSGP Nachricht einfügen.
- Sobald der SGSN eine Bestätigung für die Übersendung von Daten erhalten hat, kann der LLC wie im Acknowledged Mode verfahren.
- Bei der FLUSH Prozedur soll die BSS den S-Frame des letzten zur MS gesendeten LLC Rahmens dem SGSN senden sofern die BSS nicht ohnehin schon eine Bestätigung gesendet hat.
- Erhält der SGSN eine Bestätigung, so wird dies dem SNDCP gemeldet, welcher dann den Rahmen verwirft.

### Beispiele für Lösungsdetails zur Veranschaulichung:

### LLC:

Das derzeitige LLC Format gemäß 3GPP TS 44.064 (es sind noch weitere Datenfelder enthalten, die aber nichts zur Sache beitragen) ist das folgende:

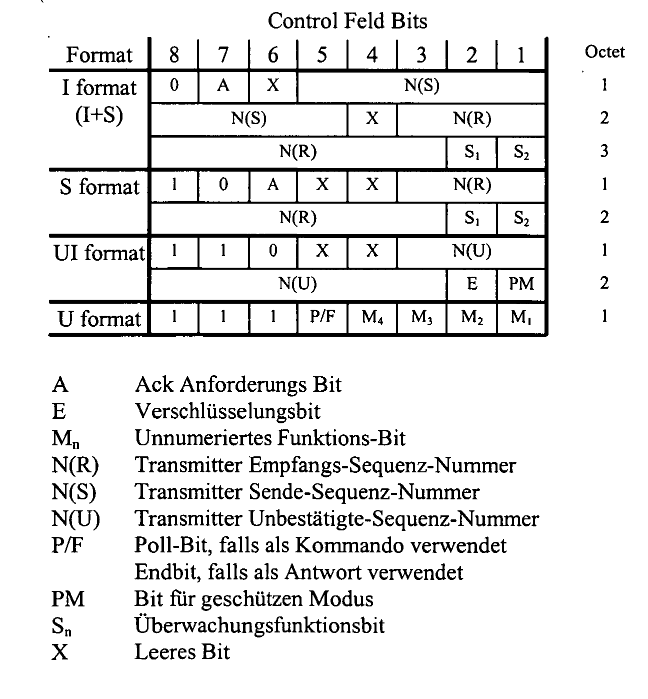

UI format wird bei Unack Mode verwendet,
I+S bei Datenübertragung im Ack Mode
S ist die Bestätigung beim Ack Mode.

### BSSGP:

Format einer DL-Unitdata PDU. Diese wird zur Übertragung von LLC PDU vom SGSN → MS verwendet (aus 3GPP TS 48.018).

Dieser PDU wird an die BSS gesendet, um Daten über das LLC-PDU und über das Radio- Interface (Funkschnittstelle) an eine MS zu übertragen.
PDU type: DL-UNITDATA
Direction: SGSN to BSS

**Tabelle:**

| **DL-UNITDATA PDU Kontent** | | | | |
|---|---|---|---|---|
| **Informationselemente** | **Typ / Referenz** | **Präsenz** | **Format** | **Länge** |
| "PDU type" | PDU type/11.3.26 | M | V | 1 |
| "TLLI (current)" | TLLI/11.3.35 | M | V | 4 |
| "QoS Profile" | QoS Profile/11.3.28 | M | V | 3 |
| "PDU Lifetime" | PDU Lifetime/11.3.25 | M | TLV | 4 |
| "MS Radio Access capability (Anmerkung 1)" | MS Radio Access Capability/11.3.22 | O | TLV | 7-? |
| "Priority" | Priority/11.3.27 | O | TLV | 3 |
| "DRX Parameters" | DRX Parameters/11.3.11 | O | TLV | 4 |
| "IMSI" | IMSI/11.3.14 | O | TLV | 5-10 |
| "TLLI" (alt) | TLLI/11.3.35 | O | TLV | 6 |
| "PFI" | PFI/1.3.42 | O | TLV | 3 |
| "LSA Information" | LSA Information/11.3.19 | O | TLV | 7-? |
| "Service UTRAN CCO" | Service UTRAN CCO/11.3.47 | O | TLV | 3 |
| "Alignment octets" | Alignment octets/11.3.1 | O | TLV | 2-5 |
| "LLC-PDU (Anmerkung 2)" | LLC-PDU/11.3.15 | M | TLV | 2-? |
| "ACK LLC-PDU (Anmerkung 3)" | LLC-PDU/11.3.15 | O | TLV | 2-? |
| Anmerkung 1: Das Feld soll vorhanden sein, falls es eine valide MS Radio Access Capability information die der SGSN kennt, sonst soll das Feld nicht vorhanden sein. Anmerkung 2: Der LLC-PDU Längen- Indikator kann null sein. Anmerkung 3: Das ACK LLC-PDU wird vom SGSN generiert, zur LLC-PDU-Bestätigung. | | | | |

Format einer UL-Unitdata PDU. Diese wird bei Datentransfer MS → SGSN verwendet.

Diese PDU überträgt an Mobilstationen MS die LLC-PDU und ist mit ihrer zugehörigen radio interface information über das Gb-interface verbunden.
PDU type: UL-UNITDATA
Direction: BSS to SGSN

**Tabelle:**

| **UL-UNITDATA PDU Content** | | | | |
|---|---|---|---|---|
| **Informations-element** | **Typ / Referenz** | **Präsenz** | **Format** | **Länge** |
| "PDU Typ" | PDU Typ/11.3.26 | M | V | 1 |
| "TLLI" | TLLI/11.3.35 | M | V | 4 |
| "QoS Profile" | QoS Profil/11.3.28 | M | V | 3 |
| "Cell Identifier" | Cell Identifizierer/ 11.3.9 | M | TLV | 10 |
| "PFI" | PFI/12.3.42 | O | TLV | 3 |
| "LSA Identifier List" | LSA Identifizierer Liste/11.3.18 | O | TLV | 3-? |
| "Alignment octets" | Alignment octets/11.3.1 | O | TLV | 2-5 |
| "LLC-PDU" (Anmekrung 1) | LLC-PDU/11.3.15M | M | TLV | 2-? |
| "LLC-PDU" (Anmerkung 2) | LLC-PDU/11.3.15 | O | TLV | |
| Anmerkung 1: Der LLC-PDU Längen Indikator kann null sein Anmerkung 2: Die BSS kann erforderlichenfalls ein LLC-PDU einfügen. | | | | |

### 10.4.2 FLUSH-LL-ACK

Diese PDU zeigt an, dass für eine MS in der alten Zelle gepufferte LLC-PDU(s) entweder gelöscht oder in die neue Zelle innerhalb der routing area (Routung- Gebiet) übertragen wurden.
PDU Typ: FLUSH-LL-ACK
Richtung: BSS zum SGSN

**Tabelle:**

| **FLUSH LL ACK PDU Kontent** | | | | |
|---|---|---|---|---|
| **Informations- elemente** | **Typ / Referenz** | **Präsenz** | **Format** | **Länge** |
| "PDU type" | PDU type/11.3.26 | M | V | 1 |
| "TLLI" | TLLI/11.3.35 | M | TLV | 6 |
| "Flush Action" | Flush Action/11.3.13 | M | TLV | 3 |
| "BVCI" (neu) | BVCI/11.3.13 | C (note 1) | TLV | 4 |
| "Number of octets affected" | Number of octets affected/11.3.41 | M | TLV | 5 |
| "NSEI" (neu) | NSEI/11.3.48 | C (note 2) | TLV | 4 |
| "PFC transfer result" | PFC transfer result/11.3.42b | O (note 3) | TLV | 3 |
| "LLC-PDU" | LLC-PDU/11.3.15 | O (note 4) | TLV | 2-? |
| Anmerkung 1: BVCI (neu) wird nur eingefügt, falls von "Flush action" angezeigt wird, dass die LLC-PDUs übertragen sind. Anmerkung 2: NSEI (neu) wird nur eingefügt, falls BVCI(neu) eingefügt wird und NSEI (neu) im FLUSH-LL PDU empfangen wird. Anmerkung 3: Das PFC Transfer Resultat wird eingefügt, falls das BSS dem SGSN anzeigen möchte, ob es möglich war oder nicht, die QoS Eigenschaften des BSS Kontext im neuen BVCI zu erhalten. Anmerkung 4: Das BSS kann ein LLC-PDU erforderlichenfalls einfügen. | | | | |

## Patentansprüche

1. Verfahren zum Übertragen von Daten in einem Mobilfunknetz,
wobei die Daten in einem SNDCP einer SGSN im Acknowledged- Modus übertragen werden, während in einem LLC der SGSN Daten im Unacknowledged- Modus übertragen werden.

2. Verfahren nach Anspruch 1,
**dadurch gekennzeichnet, dass** die Daten Streaming- Daten sind.

3. Verfahren nach einem der vorhergehenden Ansprüche,
**dadurch gekennzeichnet, dass** in einem im Acknowledged Mode arbeitenden SNDCP Vorkehrungen zur Behandlung von Datenverlusten deaktiviert werden, insbesondere Vorkehrungen betreffend Lücken in SNDCP Sequenznummern.

4. Verfahren nach einem der vorhergehenden Ansprüche,
**dadurch gekennzeichnet, dass** der LLC in der UnAcknowledged-Betriebsart arbeitet, dass aber beim Empfang von Daten vom SNDCP die Daten eine Zeit lang zwischengespeichert werden.

5. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Der LLC übergibt dem BSSGP den LLC Frame ("UI Frame") und die erwartete Bestätigung ("S-Frame").

6. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Der BSSGP sendet dem LLC Rahmen und Bestätigung in separaten Informationselementen, aber in derselben Nachricht.

7. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Die BSS sendet einen erhaltenen LLC Rahmen der MS und die BSS sendet den "S-Frame" dem SGSN zurück:

8. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Gibt es Datenverkehr von einer Mobilstation zu einem SGSN, so fügt die BSS den "S-Frame" auch dort in die BSSGP Nachricht ein.

9. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Sobald der SGSN die Bestätigung erhalten hat, kann der LLC wie im Acknowledged Mode verfahren.

10. Verfahren nach einem der vorhergehenden Ansprüche,
**dadurch gekennzeichnet, dass** der LLC in der UnAcknowledged-Betriebsart arbeitet mit der folgenden Änderungen der UnAcknowledged-Betriebsart:
- Bei der FLUSH Prozedur sendet die BSS den S-Frame des letzten zur MS gesendeten LLC Rahmens dem SGSN falls der Bestätigungsrahmen nicht schon gesendet wurde.

11. Verfahren nach einem der vorhergehenden Ansprüche,
**dadurch gekennzeichnet, dass** der LLC in der UnAcknowledged-Betriebsart arbeitet mit der folgenden Änderung der UnAcknowledged-Betriebsart:
- Erhält der SGSN eine Bestätigung, so wird dies dem SNDCP gemeldet welcher dies als Bestätigung betrachtet und den dazugehörenden SNDCP Rahmen verwirft.

12. Verfahren nach einem der vorhergehenden Ansprüche,
**dadurch gekennzeichnet, dass** die BSS nicht für jeden Rahmen eine Bestätigung sendet.

13. Verfahren nach einem der vorhergehenden Ansprüche,
**dadurch gekennzeichnet, dass** eine Bestätigung einer BSS für den Erhalt eines Rahmens als Bestätigung für den Empfang dieses Rahmens und aller Rahmen vor diesem Rahmen bis zum letzten Empfangs- bestätigten Rahmen definiert ist.

14. SGSN zum Übertragen von Daten in einem Mobilfunknetz,, insbesondere zum Durchführen des Verfahrens nach einem der vorhergehenden Ansprüche,
- mit einer SNDCP im Acknowledged- Modus und
- mit einer LLC im Unacknowledged- Modus.
